# EUROPÄISCHE PATENTANMELDUNG

(11) **EP 0 613 613 A1**
(43) Veröffentlichungstag der Anmeldung: **07.09.1994**
(21) Anmeldenummer: 94102387.1
(22) Anmeldetag: 17.02.1994
(51) Int. Cl.: A01C 1/00, A01C 17/00

(54) **Schleuderdüngerstreuer**

(30) Priorität: 27.02.1993 DE 4306203; 27.02.1993 DE 4306204
(71) Anmelder: Amazonen-Werke H. Dreyer GmbH & Co. KG, D-49205 Hasbergen (DE)
(72) Erfinder: Dreyer, Heinz, Dipl.-Ing. Dr., D-49205 Hasbergen (DE)

(57) **Zusammenfassung**

Schleuderdüngerstreuer mit einem Rahmen (1), Vorratsbehälter (3) und Dosierorganen (14), unter denen am Rahmen (1) rotierend angetriebene und mit Wurfschaufeln (5,6) besetzte Schleuderscheiben (4) angeordnet sind, wobei durch eine Relativbewegung von Dosierorgan (14) und Schleuderscheibe (4) zueinander die Aufgabefläche des von dem Dosierorgan (14) der Schleuderscheibe (4) zudosierten Düngers auf der Schleuderscheibe (4) verlagerbar ist. Um auf einfache Weise den Schleuderdüngerstreuer von einer Arbeitsbreite auf eine andere und/oder auf eine andere Ausbringart, wie von Normalstreuen auf Grenzstreuen und umgekehrt einstellen zu können, ist vorgesehen, daß die Aufgabefläche in zumindest zwei festgelegte oder festlegbare Stellungen verlagerbar bzw. verstellbar ist (Fig. 2).

## Beschreibung

Die Erfindung betrifft einen Schleuderdüngerstreuer gemäß des Oberbegriffes des Patentanspruches 1.

Ein derartiger Schleuderdüngerstreuer ist durch die DE-OS 38 04 412 bekannt. Durch die Verlagerung der Aufgabefläche kann die Maschine an verschiebene Arbeitsbreiten oder Streustoffeigenschaften angepaßt werden.

Der Erfindung liegt die Aufgabe zugrunde, auf einfache Weise den Schleuderdüngerstreuer von einer Arbeitsbreite auf eine andere und/oder auf eine andere Ausbringart, wie von Normalstreuen auf Grenzstreuen und umgekehrt einstellen zu können.

Diese Aufgabe wird in erfindungsgemäßer Weise durch das Merkmal des Patentanspruches 1 gelöst. Infolge dieser Maßnahme kann in einfachster Weise der Schleuderdüngerstreuer von der einen auf die andere Arbeitsbreite oder vom Normal- auf Grenzstreuen umgestellt werden. Da die Stellungen für die jeweiligen Aufgabeflächen festgelegt bzw. festlegbar sind, ist der Schleuderdüngerstreuer in einfacher Weise exakt wiederholbar einzustellen. Hierbei ist vorgesehen, daß in der Streuhalle für jede Düngersorte und Arbeitsbreite die optimale Stellung ermittelt wird, die dann in einer Streutabelle oder in einen Rechner hinterlegt wird. Der Landwirt braucht dann nur zu Beginn des Ausbringvorganges die exakt definiert festgelegten bzw. festlegbaren Stellungen vorzuwählen.

Hierbei ist vorgesehen, daß die Aufgabefläche derart verlagerbar ist, daß die eine festgelegte oder festlegbare Stellung für das "Normalstreuen" und die andere festgelegte oder festlegbare Stellung für das "Grenzstreuen" vorgesehen ist. Hierdurch wird die Grundvoraussetzung dafür geschaffen, daß vom Schleppersitz aus die Aufgabefläche in exakter Weise verlagerbar ist.

Hierbei kann vorgesehen sein, daß zumindest eine weitere Stellung für eine weitere Arbeitsbreite für das "Normalstreuen" und/oder für das "Grenzstreuen" festlegbar ist. Hierdurch kann der Landwirt die Arbeitsbreite sowie die Grenzarbeitsbreite im Randstreifenbereich, wenn dieser nicht mehr der ganzen normalen Arbeitsbreite entspricht, anpassen.

Bei einem Schleuderdüngerstreuer, der zumindest zwei Dosierorgane und zwei Schleuderscheiben aufweist, ist vorgesehen, daß die Aufgabeflächen wahlweise gemeinsam oder unabhängig voneinander verlagerbar sind. Hierdurch kann dann das gesamte Streubild über die Arbeitsbreite gleichmäßig und symmetrisch wie auch unsymmetrisch verändert werden. Dieses ist insbesondere dann von Vorteil, wenn schräg zulaufende Randstreifen zu bestreuen sind.

In einer Ausführungsform ist vorgesehen, daß die Schleuderscheiben gegenüber den Dosierorganen bewegbar am Rahmen angeordnet sind, und daß die die festgelegten Positionen der Aufgabefläche des Düngers auf die Schleuderscheiben bestimmenden Elemente, wie Anschläge in einstellbarer Weise zwischen dem Rahmen und der Lagerung der Schleuderscheibe angeordnet sind. Durch die Elemente werden die vorgesehenen festgelegten Positionen der Schleuderscheibe zwecks Aufgabenverlagerung des Düngers auf der Schleuderscheibe exakt definiert eingestellt. Diese Positionen sind für die jeweilige Düngersorte auf einem Streuprüfstand ermittelt und in eine Streutabelle eingetragen worden.

In einer anderen Ausführungsform ist vorgesehen, daß die Schleuderscheiben um eine liegende Achse verschwenkbar am Rahmen angeordnet sind. Auch hierdurch kann eine Verlagerung der Aufgabenfläche erfolgen. Hierbei kann die Schwenkachse sich mit der Achse, um welche sich die Schleuderscheibe dreht, kreuzen oder im Abstand hierzu liegen.

In einer anderen Ausführungsform ist vorgesehen, daß unterhalb zumindest eines der Dosierorgane zumindest ein verstellbares Leitorgan oberhalb der Schleuderscheibe angeordnet ist, welches in zumindest zwei festgelegte Stellungen bewegbar ist. Dieses Leitorgan kann als Rutsche oder verschwenkbares Leitblech ausgebildet sein. Die Rutsche kann verschwenkbar oder verschiebbar am Schleuderdüngerstreuer angeordnet sein. Die festgelegten Positionen können durch Rasten, Anschläge etc. exakt bestimmt werden.

Weiterhin ist vorgesehen, daß die Leitfläche an einem Schieber bewegbar befestigt ist. Bei Schleuderdüngerstreuern, bei denen die Öffnungsposition des Schiebers durch ein Anschlagelement festgelegt ist, ist vorgesehen, daß die Leitfläche an dem Anschlagelement bewegbar befestigt ist.

In einer anderen Ausführungsform ist bei einem Schleuderdüngerstreuer, bei dem zusätzlich zu dem die Öffnungsweite der Auslauföffnung bestimmenden Schieber ein weiterer Schieber zum Öffnen und Schließen der Auslauföffnung vorgesehen ist, daß die Leitfläche an dem die Öffnungsweite der Auslauföffnung bestimmenden Schieber befestigt ist.

Weiterhin kann vorgesehen sein, daß zusätzlich zu der ersten verschwenkbaren Leitfläche eine dieser gegenüberliegende zweite Leitfläche an dem Dosierorgan vorgesehen ist. Auch diese zweite Leitfläche kann in exakt definierte Positionen mittels Rasten, Anschläge etc. einstellbar sein.

In einer Weiterbildung der Erfindung ist vorgesehen, daß die Aufgabeflächenverlagerung und/oder die Verstellung der Leitflächen mit der Mengeneinstellung derart verknüpft ist, daß bei Umstellung der Leitflächen von "Normalstreuen" auf "Grenzstreuen" gleichzeitig die Mengeneinstellung auf eine kleinere Ausbringmenge einstellbar ist. Hierbei ist vorgesehen, daß für die Festlegung der festgelegten Positionen der Leitfläche einstellbare Anschläge vorgesehen sind, die vor Beginn der Streubreite auf die gewünschte Normalarbeitsbreite" und die "Grenzstreubreite" einstellbar sind.

Weiterhin ist vorgesehen, daß die Wurfschaufeln in Scheibenebene winkelverschwenkbar angeordnet und anhand von Markierungselementen in die jeweilige Position einstellbar sind. Aufgrund dieser Maßnahme lassen sich die Wurfschaufeln auf die jeweiligen Streueigenschaften der auszustreuenden Düngersorte einstellen. Um in einfacher Weise die Spätdüngung durchführen zu können, ist vorgesehen, daß die Wurfschaufeln an ihren Abwurfenden in aufrechter Ebene veränderbare untere Leitflächen (sog. Schwenkschaufeln) aufweisen.

Durch die Aufgabenflächenverlagerung kann der Schleuderdüngerstreuer einfach an unterschiedliche Arbeitsbedingungen angepaßt werden. Hierbei wird die Aufgabenflächenverlagerung derart vorgenommen, daß zum Grenzstreuen die Aufgabeflächenverlagerung im wesentlichen nach außen und etwas in Drehrichtung verlagert wird, während bei einer Verringerung der Arbeitsbreite die Aufgabenflächenverlagerung im wesentlichen in Drehrichtung und nach außen in geringerem Maße als beim Grenzstreuen erfolgt. Die genauen Positionen und die genaue Aufgabenflächenverlagerung des Düngers auf der Schleuderscheibe werden in Streuversuchen auf dem Streustand ermittelt.

Um auf einfache Weise den Schleuderdüngerstreuer an verschiedene Arbeitsbedingungen und auf unterschiedliche Arbeitsbreiten einstellen zu können,ist in einer weiteren Ausführung der Erfindung vorgesehen, daß die Aufgabefläche des von den Dosierorganen aus dem Vorratsbehälter auf die Schleuderscheiben aufgegebenen Düngers verlagerbar ist.

In einer Weiterbildung der Erfindung ist vorgesehen, um die Spätdüngung in einfacher Weise durchführen zu können, daß die Wurfschaufeln an ihren Abwurfenden in aufrechter Ebene veränderbare untere Leitflächen aufweisen.

Zur Aufgabeflächenverlagerung kann vorgesehen sein, daß die Schleuderscheiben an dem Gestell des Schleuderdüngerstreuer gegenüber den Dosierorganen bewegbar angeordnet sind. Hierbei kann in einer einfachen Ausführungsform, vorgesehen sein, daß die Schleuderscheiben mittels einer Schiebeführung an dem Gestell angeordnet sind. Es ist auch möglich, die Schleuderscheiben mittels einer Schwenkführung an dem Gestell anzuordnen.

In einer weiteren Ausführungsform ist vorgesehen, daß die Dosierorgane gegenüber dem Vorratsbehälter bewegbar angeordnet sind.

Auch kann eine Aufgabeflächenverlagerung dadurch erfolgen, daß zwischen den Dosierorganen und den Schleuderscheiben Leitelemente angeordnet sind.

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Seitenansicht und Prinzipdarstellung,
- Fig. 2: den Schleuderdüngerstreuer in der Ansicht von hinten und in Prinzipdarstellung,
- Fig. 3: die Auslauföffnung mit darunter angeordnetem Schieber und Leitelement im Teilschnitt und in Prinzipdarstellung in der Ansicht von hinten und im vergrößerten Maßstab,
- Fig. 4: die beiden Schleuderscheiben in der Draufsicht und vergrößertem Maßstab,
- Fig. 5: das Normalstreubild in Prinzipdarstellung,
- Fig. 6: das Grenzstreubild in Prinzipdarstellung,
- Fig. 7: einen weiteren Schleuderdüngerstreuer in der Ansicht von hinten und in Prinzipdarstellung,
- Fig. 8: das unterhalb der Auslauföffnung angeordnete Leitelement in vergrößertem Maßstab in Prinzipdarstellung,
- Fig. 9: einen weiteren Schleudrdüngerstreuer in der Seitenansicht.

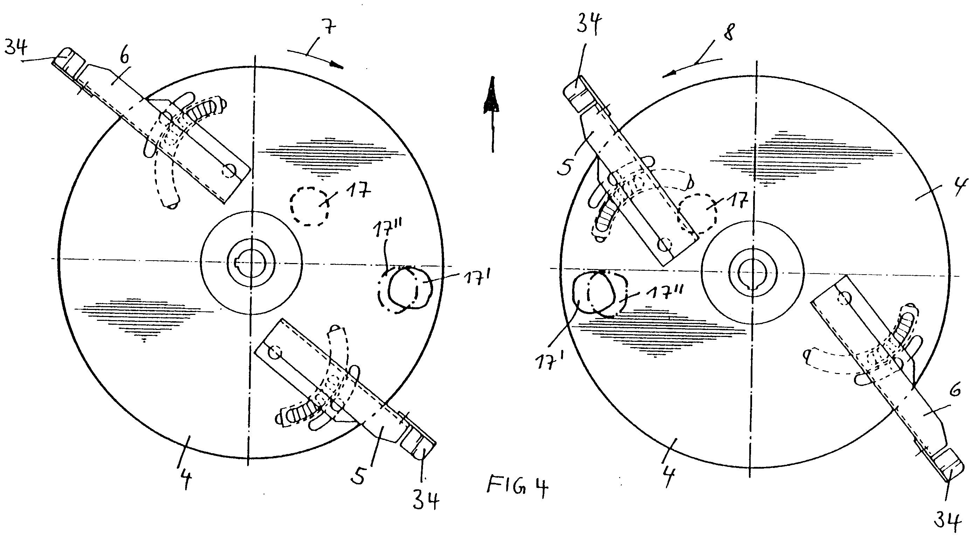

Der Schleuderdüngerstreuer weist den Rahmen 1, auf dessen Vorderseite die Dreipunktkupplungselemente 2 angeordnet sind, den Vorratsbehälter 3 sowie die beiden Schleuderscheiben 4 mit den Wurfelementen 5 und 6 auf. Die Schleuderscheiben 4 werden im einander entgegengesetzten Drehsinn, wie dieses durch die Pfeile 7 und 8 in Fig. 4 angedeutet ist, rotierend angetrieben.

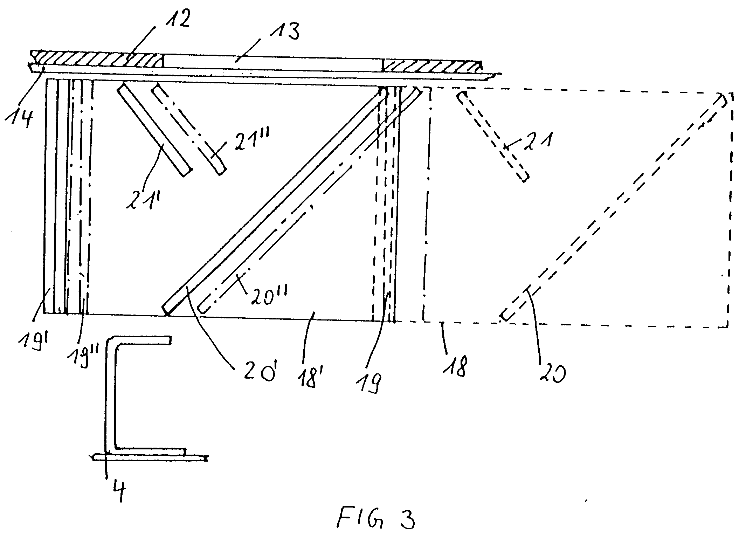

Der Vorratsbehälter 3 ist durch das dachförmige Mittelteil 9 in die beiden Auslauftrichter 10 und 11 aufgeteilt. Unterhalb der Auslauftrichter 10 und 11 befindet sich jeweils die Bodenplatte 12, in der sich eine bekannte Auslauföffnung 13 befindet, wie dieses in Fig. 3 angedeutet ist. Die Auslauföffnung 13 wird durch den Schieber 14 verschlossen. Über den jeweiligen Schieber 14 ist die Öffnungsweite der Auslauföffnungen in unterschiedliche Öffnungsstellungen einzustellen. Die Schleuderscheiben 4 sind jeweils leicht lösbar auf den Schleuderscheibenantriebswellen 15 des Winkelgetriebes 16 befestigt, so daß sie leicht gegen andere Schleuderscheiben austauschbar sind. Die jeweilige Schleuderscheibenantriebswelle 15 ragt aus dem Winkelgetriebe 16 heraus, wobei der Antrieb der Winkelgetriebe 16 mittels einer Gelenkwelle von der Zapfwelle eines den Schleuderdüngerstreuer tragenden Ackerschleppers erfolgt. Auf den Schleuderscheiben 4 ist jeweils in Scheibenebene eine kurze 5 und eine längere 6 Wurfschaufel winkelverschwenkbar mit unterschiedlichen Winkeln anhand von Markierungselementen einstellbar angeordnet. Den Schleuderscheiben 4 wird aus dem Vorratsbehälter 3 über die Auslauföffnungen 13, die in ihrer Öffnungsweite durch die Schieber 14 einstellbar sind, die Düngemittel zugeführt. Der Dünger wird auf den Schleuderscheiben 4 auf die Aufgabefläche 17 aufgegeben.

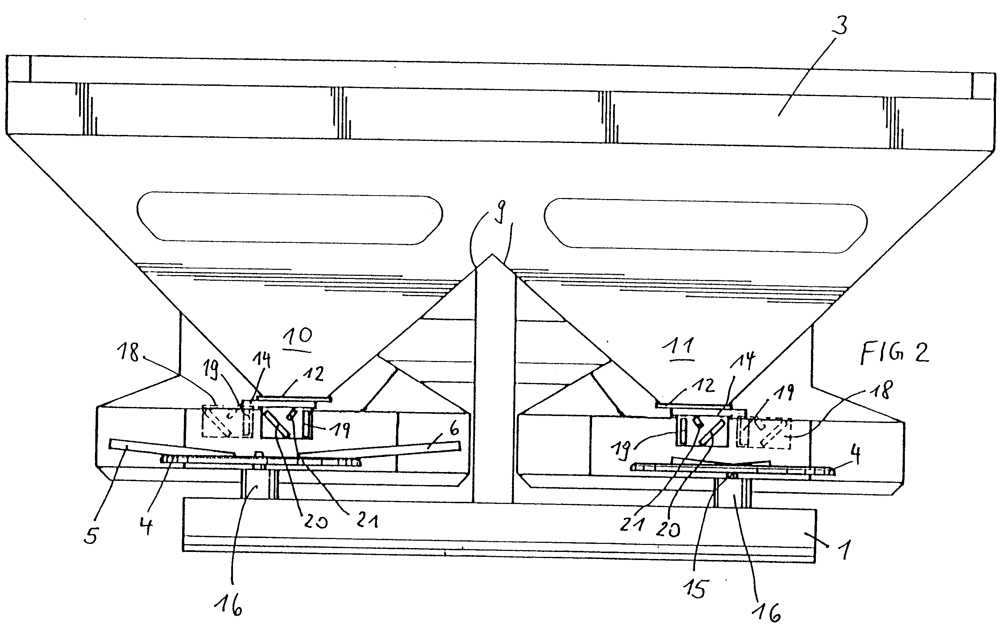

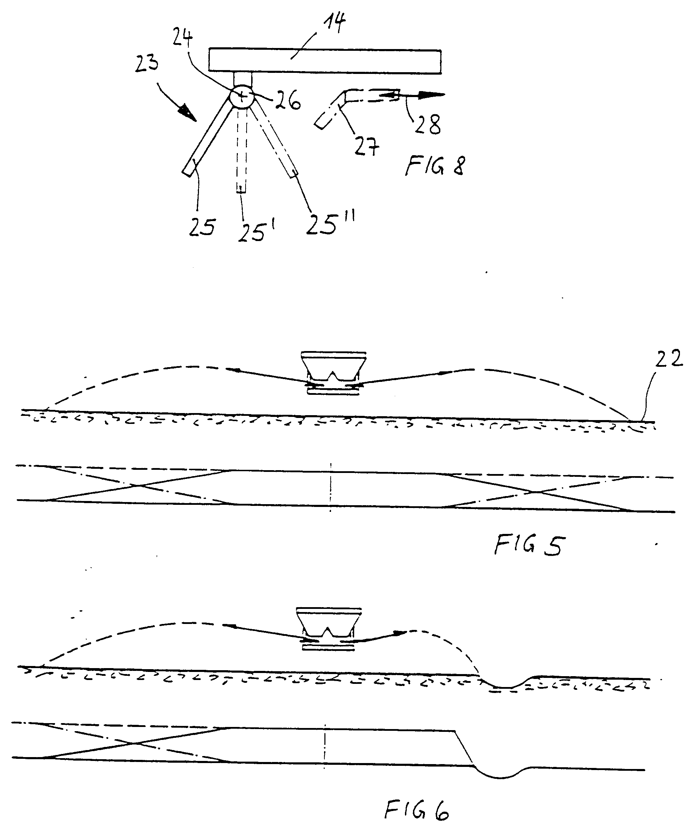

Unterhalb der Auslauföffnung 13 und des Schiebers 14 befindet sich das Leitelement 18 mit den Leitflächen 19, 20 und 21. Das Leitelement 18 ist mittels einer nicht dargestellten Schiebeführung an dem Rahmen 1 bzw. dem Vorratsbehälter 3 befestigt. Mittels dieser Leitelemente 18 läßt sich die Aufgabefläche 17 des aus dem Vorratsbehälter 3 auf die Schleuderscheiben 4 aufgegebenen Düngers auf der Schleuderscheibe 4 verlagern. In der in Fig. 2 und 3 mit gestrichelten Linien wiedergegebenen Position beeinflussen die Leitelemente 18 die Düngeraufgabe aus der Auslauföffnung 13 auf die Schleuderscheiben 4 nicht. In dieser Stellung wird der Dünger auf der in Fig. 4 mit gestrichelten Linien eingezogenen Position der Aufgabenfläche 17 aufgegeben. In dieser Stellung entsteht das in Fig. 5 dargestellte Normalstreubild 19. Der Düngerstreuer ist also für das Normalstreuen eingestellt. Die senkrechte Leitfläche 19 stellt sicher, daß der Düngerstrom auf die vorgesehene Position der Aufgabefläche 17 ungehindert auf die Schleuderscheiben 4 fällt und von der in Fig. 3 angedeuteten Wurfschaufel 5 erfaßt und in Breitverteilung auf der Bodenoberfläche 22 verteilt wird.

Um das in Fig. 6 dargestellte Grenzstreubild zu erzielen, um das Grenzstreuen durchzuführen, wird das Leitelement 18 in die mit durchzogenen Linien dargestellte Position gebracht. Der Dünger wird in dieser Position 18' im wesentlichen von der langen schrägen Leitfläche 20 abgelenkt, so daß der Dünger auf der mit durchzogenen Linien in Fig. 4 dargestellten Aufgabefläche 17' auf die Schleuderscheibe 4 gelangt.

Wenn die Grenzarbeitsbreite verändert werden muß, so läßt sich das Leitelement 18 in die mit strichpunktierten Linien angedeutete Stellung 18'' bringen. In dieser Position wird der Düngerstrom zusätzlich durch die kurze Leitfläche 21 abgelenkt und zu einem engen Düngerstrom zusammengefaßt, der dann von der längeren Leitfläche 20 auf die Schleuderscheibe 4 geleitet wird, so daß der Dünger dann auf die Aufgabefläche 17'' die mit strichpunktierten Linien, die in Fig. 4 eingezeichnet ist, aufgegeben wird.

Die in Fig. 3 dargestellten unterschiedlichen Positionen 18, 18' und 18'' sind durch nicht dargestellte Anschläge festgelegt. Somit ist also die Aufgabefläche 17, 17', 17'' in zumindest zwei festgelegte oder festlegbare Stellungen verlagerbar bzw. verstellbar. Hierbei ist die eine festgelegte Stellung 18 für das Normalstreuen und die andere festgelegte Stellung 18' für das Grenzstreuen vorgesehen. Darüberhinaus ist bei dem Ausführungsbeispiel, wie zu Fig. 3 erläutert, eine weitere Arbeitsbreite für das Grenzstreuen vorgesehen, die ebenfalls festgelegt ist. Darüberhinaus können durch entsprechende Auslegung der Anschläge auch noch eine weitere Arbeitsbreite für das Normalstreuen festgelegt sein. Die Anschläge oder Rasten, die die Position der Leitelemente 18 bestimmen, sind anhand von Skalen oder Markierungselementen einstellbar. Die jeweils für die entsprechende Düngersorte vorgesehene Stellung der Leitelemente 18 wird auf einem Streustand ermittelt und in eine Streutabelle eingetragen, somit kann der Landwirt anhand der Streutabelle entsprechend der jeweils auszubringenden Düngersorte und der gewünschten Arbeitsbreite und vorgesehenen Grenzstreubreite die Positionen für die Leitelemente vorwählen. An den Leitelementen ist eine nicht dargestellte Fernbedienungsvorrichtung angeschlossen, so daß vom Schleppersitz aus die Leitelemente 18 in die festgelegte Position bringbar sind.

Hierbei ist die Verstellung so vorgesehen, daß, wie die Fig. 6 zeigt, die Aufgabeflächen 17 jeder Schleuderscheibe unabhängig voneinander verlagerbar sind, so daß das dargestellte Grenzstreubild entsteht. Selbstverständlich können auch die Aufgabeflächen 17 gemeinsam in gleicher Weise verlagert werden, so daß beim Normalstreuen die Arbeitsbreite symmetrisch zur Mittellinie des Schleuderstreuers veränderbar ist. Auch können, wie bereits vor gesagt, die Aufgabeflächen unabhängig voneinander verlagert werden, so daß auch beim Normalstreuen ein asymmetrisches Streubild erzielt werden kann. Ebenfalls läßt sich ein symmetrisches Grenzstreubild erreichen, d.h., daß auf beiden Seiten ein Streubild mit steil abfallenden Streuflanken erzielbar ist.

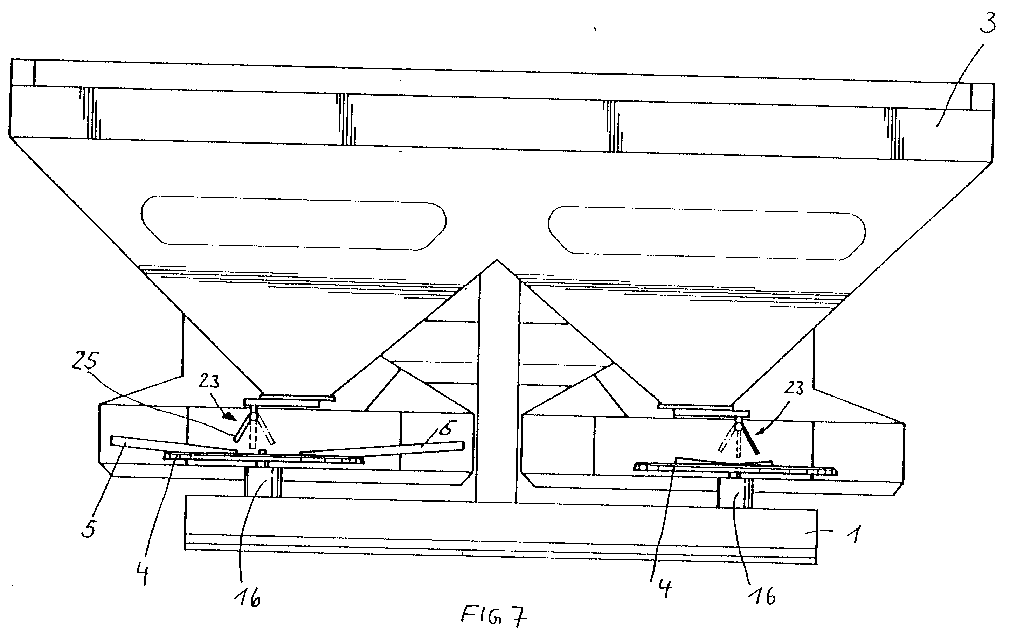

Bei dem Ausführungsbeispiel nach den Fig. 7 und 8 ist ebenfalls unterhalb des Schiebers 14 und oberhalb der Schleuderscheiben 4 ein Leitorgan 23 angeordnet. Dieses Leitorgan 23 besteht jeweils aus einer um eine aufrechte oder liegende Schwenkachse 24 verschwenkbare Leitfläche 25, die in neben der mit durchzogenen Linien dargestellte Position in weitere festlegbare Positionen 24' und 24'' schwenkbar ist. Im Ausführungsbeispiel nach den Fig. 7 und 8 ist das Leitorgan 23 an dem Schieber 14 mittels der Gelenkverbindung 26 befestigt. Für das Normalstreuen befindet sich die Leitfläche in der mit durchzogenen Linien dargestellten Position. Zu einer geringfügigen Veränderung der Arbeitsbreite wird die Leitfläche 25 in die mit gestrichelten Linien dargestellte Position 25' verschwenkt, so daß eine Aufgabenflächenveränderung stattfindet. Zum Grenzstreuen wird die Leitfläche 25 in die mit strichpunktierten Linien dargestellte Position 25' geschwenkt. In einigen Fällen kann es erforderlich sein, unterhalb des Schiebers 14 eine weitere Leitfläche 27, die der ersten Leitfläche 25 gegenüberliegt vorzusehen, welche ebenfalls in verschiedene festgelegte oder festlegbare Positionen einzustellen ist. Vorzugsweise ist die Leitfläche, wie Fig. 8 zeigt, verschiebbar am Schieber 14 befestigt und in den durch die Pfeile 28 angedeutete Richtungen hin und her verschiebbar. Die Leitfläche 27 ist mittels Rasten oder Anschlägen in vorwählbare Positionen, die festlegbar sind, zu bringen. Gleiches gilt für die Leitfläche 25, die mittels des Gelenkes 26 verschwenkbar an dem Schieber 14 befestigt ist. Auch hier sind Rasten oder Anschläge vorgesehen, welche die erforderlichen Positionen in festlegbarer Weise bestimmen. Diese Positionen werden auf einem Streustand anhand von Streuversuchen ermittelt und in eine Streutabelle eingetragen, so daß der Landwirt an den vorgesehenen Skalen oder Markierungselementen oder mit Hilfe von Lehren die erforderlichen Positionen genau festlegen kann. An den Leitflächen 24 und 27 können Fernbedienungsvorrichtungen angeschlossen sein, so daß vom Schleppersitz aus die Leitflächen 24 und 27 in ihre jeweils festgelegte Position bringbar sind.

Desweiteren kann die Aufgabeflächenverlagerung und die Verstellung der Leitflächen 24 und 27 mit der Mengeneinstellung derart verknüpft sein, daß bei Umstellung der Leitflächen 24 und 27 von "Normalstreuen" auf "Grenzstreuen" gleichzeitig die Mengeneinstellung, die durch die Stellungen des Schiebers 14 bestimmt ist, auf eine kleinere Ausbringmenge einstellbar. D.h., daß bei einer Verstellung der Leitfläche 24 und 27, wodurch eine Aufgabenflächenverlagerung hervorgerufen wird, mit der der Schieber 14 gekoppelt oder verknüpft ist. Diese Verknüpfung kann auch über eine elektronische Einstellvorrichtung erfolgen. Die Fernbedienungseinrichtung kann als elektrische oder elektronische Einstellvorrichtung ausgebildet sein, mittels welcher die festgelegten Positionen der Leitfläche 24 bzw. 27 in vorteilhafter Weise festleg- und einstellbar sind. Gleichzeitig kann über diese elektronische Einstellvorrichtung auch die Einstellung des Schiebers 14, d.h., die Mengeneinstellung erfolgen.

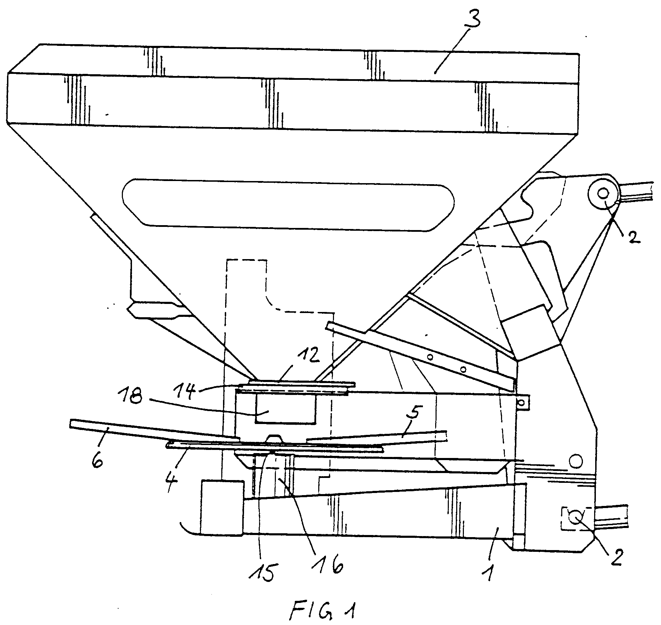

Der Schleuderdüngerstreuer gemäß Fig. 9 unterscheidet sich von dem Schleuderdüngerstreuer gemäß den Fig. 1 bis 4 dadurch, daß das Winkelgetriebe 29 um eine quer zur Fahrtrichtung 30 verlaufende Achse 31 verschwenkbar am Rahmen 1 angeordnet ist. Hierbei kann die Verschwenkung in der einen Ausführungsform so vorgesehen sein, daß die Schwenkachse 31 mit der Eingangswellenachse 32 zusammenfällt. In einer anderen Ausführungsform ist es möglich, das Winkelgetriebe 29 nicht um die Eingangswellenachse 32, sondern um die in einem Abstand hierzu liegende Schwenkachse 33 verschwenkbar ist. Hierzu ist es dann erforderlich, daß an dem Winkelgetriebe 29 entsprechende Flansche 34 vorgesehen sind, die eine Befestigung am Rahmen 1 des Düngerstreuers gestatten.

Die Wurfschaufeln 5 und 6 weisen an ihren Abwurfenden in aufrechter Ebene veränderbare untere Leitflächen 34 auf, um Normal- und Spätdüngung auf einfachste Weise durchführen zu können.

## Patentansprüche

1. Schleuderdüngerstreuer mit einem Rahmen (1), Vorratsbehälter (3) und Dosierorganen (13,14), unter denen am Rahmen (1) rotierend angetriebene und mit Wurfschaufeln (5,6) besetzte Schleuderscheiben (4) angeordnet sind, wobei durch eine Relativbewegung von Dosierorgan (13,14) und Schleuderscheibe (4) zueinander die Aufgabefläche des von dem Dosierorgan (13,14) der Schleuderscheibe (4) zudosierten Düngers auf der Schleuderscheibe (4) verlagerbar ist, dadurch gekennzeichnet, daß die Aufgabefläche (17,17',17'') in zumindest zwei festgelegte oder festlegbare Stellungen verlagerbar bzw. verstellbar ist.

2. Schleuderdüngerstreuer nach Anspruch 1, dadurch gekennzeichnet, daß die Aufgabefläche (17,17') derart verlagerbar ist, daß die eine festgelegte oder festlegbare Stellung für das "Normalstreuen" und die andere festgelegte oder festlegbare Stellung für das "Grenzstreuen" vorgesehen ist.

3. Schleuderdüngerstreuer nach Anspruch 2, dadurch gekennzeichnet, daß zumindest eine weitere Stellung (17'') für eine weitere Arbeitsbreite für das "Normalstreuen" und/oder für das "Grenzstreuen" festlegbar ist.

4. Schleuderdüngerstreuer nach einem oder mehreren der vorstehenden Ansprüche, dadurch gekennzeichnet, daß zumindest eine Fernbedienungsvorrichtung zur Verlagerung der Aufgabefläche (17,17',17'') vorgesehen ist.

5. Schleuderdüngerstreuer nach einem oder mehreren der vorstehenden Ansprüche, wobei zumindest zwei Dosierorgane (13,14) und Schleuderscheiben (4) vorgesehen sind, dadurch gekennzeichnet, daß die Aufgabeflächen (17,17',17'') gemeinsam und unabhängig voneinander verlagerbar sind.

6. Schleuderdüngerstreuer nach einem oder mehreren der vorstehenden Ansprüche, dadurch gekennzeichnet, daß die Schleuderscheiben (4) gegenüber den Dosierorganen (13,14) bewegbar am Rahmen (1) angeordnet sind, und daß die die festgelegten Positionen der Aufgabefläche (17,17',17'') des Düngers auf der Schleuderscheibe (4) bestimmenden Anschläge in einstellbarer Weise zwischen dem Rahmen (1) und der Lagerung der Schleuderscheibe (4) angeordnet sind.

7. Schleuderdüngerstreuer nach einem oder mehreren der vorstehenden Ansprüche, dadurch gekennzeichnet, daß die Schleuderscheibe (4) um eine liegende Achse verschwenkbar am Rahmen (1) angeordnet ist.

8. Schleuderdüngerstreuer nach einem oder mehreren der vorstehenden Ansprüche, wobei die Schleuderscheibe (4) auf einer aufrecht ausgerichteten Welle eines Winkelgetriebes (29), das eine liegende Eingangswelle aufweist, angeordnet ist, dadurch gekennzeichnet, daß das Winkelgetriebe (29) um die Eingangswelle (31) oder um eine in einem Abstand zur Eingangswelle befindliche und liegende Achse (33) verschwenkbar ist.

9. Schleuderdüngerstreuer nach einem oder mehreren der vorstehenden Ansprüche, dadurch gekennzeichnet, daß die Schwenkachse (31,33) horizontal verläuft.

10. Schleuderdüngerstreuer nach einem oder mehreren der vorstehenden Ansprüche, dadurch gekennzeichnet, daß die Schwenkachse quer oder schräg zur Fahrtrichtung verläuft.

11. Schleuderdüngerstreuer nach einem oder mehreren der vorstehenden Ansprüche, dadurch gekennzeichnet, daß unterhalb zumindest eines der Dosierorgane (13,14) zumindest ein verstellbares (18,23,25) Leitorgan oberhalb der Schleuderscheibe (4) angeordnet ist, welches in zumindest zwei festgelegte Stellungen bewegbar ist.

12. Schleuderdüngerstreuer nach einem oder mehreren der vorstehenden Ansprüche, dadurch gekennzeichnet, daß die Leitfläche (25) um eine aufrechte oder liegende Schwenkachse in die festgelegten Positionen schwenkbar ist.

13. Schleuderdüngerstreuer nach einem oder mehreren der vorstehenden Ansprüche, wobei das jeweilige Dosierorgan als in der Bodenplatte (12) befindliche und in ihrer Öffnungsweite mittels zumindest eines Schiebers (14) einstellbare Auslauföffnung (15) ausgebildet ist, dadurch gekennzeichnet, daß die Leitfläche an dem Schieber (14) bewegbar befestigt ist.

14. Schleuderdüngerstreuer nach einem oder mehreren der vorstehenden Ansprüche, wobei das jeweilige Dosierorgan als in der Bodenplatte (12) befindliche und in ihrer Öffnungsweite mittels eines Schiebers (14) einstellbare Auslauföffnung (13) ausgebildet ist, wobei die Öffnungsstellung des Schiebers (14) durch ein Anschlagelement festlegbar ist, dadurch gekennzeichnet, daß die Leitfläche an dem Anschlagelement bewegbar befestigt ist.

15. Schleuderdüngerstreuer nach einem oder mehreren der vorstehenden Ansprüche, dadurch gekennzeichnet, daß zusätzlich zu dem die Öffnungsweite der Auslauföffnung (13) bestimmenden Schieber (14) ein weiterer Schieber zum Öffnen und Schließen der Auslauföffnung vorgesehen ist, daß die Leitfläche an dem die Öffnungsweite der Auslauföffnung bestimmenden Schieber befestigt ist.

16. Schleuderdüngerstreuer nach einem oder mehreren der vorstehenden Ansprüche, dadurch gekennzeichnet, daß zusätzlich zu der ersten verschwenkbaren Leitfläche (25) eine dieser gegenüberliegende zweite Leitfläche (27) an dem Dosierorgan (13,14) vorgesehen ist.

17. Schleuderdüngerstreuer nach einem oder mehreren der vorstehenden Ansprüche, dadurch gekennzeichnet, daß die zweite Leitfläche (27) in verschiedene Positionen zum Dosierorgan (13,14) und der Schleuderscheibe (4) einstellbar ist.

18. Schleuderdüngerstreuer nach einem oder mehreren der vorstehenden Ansprüche, dadurch gekennzeichnet, daß die Aufgabeflächenverlagerung und/oder die Verstellung der Leitfläche (18,23) mit der Mengeneinstellung derart verknüpft ist, daß bei Umstellung der Leitfläche (18,23) von "Normalstreuen" auf "Grenzstreuen" gleichzeitig die Mengeneinstellung auf eine kleinere Ausbringmenge einstellbar ist.

19. Schleuderdüngerstreuer nach einem oder mehreren der vorstehenden Ansprüche, dadurch gekennzeichnet, daß für die Festlegung der festgelegten Postionen der Leitfläche (18,23) einstellbare Anschläge vorgesehen sind, die vor Beginn der Streubreite auf die gewünschte "Normalarbeitsbreite" bzw. "Grenzstreubreite" einstellbar sind.

20. Schleuderdüngerstreuer nach einem oder mehreren der vorstehenden Ansprüche, dadurch gekennzeichnet, daß eine elektrische und/oder elektronische Einstellvorrichtung vorgesehen ist, mittels welcher die festgelegten Positionen der Leitfläche (18,23) festleg- und einstellbar sind.

21. Schleuderdüngerstreuer nach einem oder meheren der vorstehenden Ansprüche, dadurch gekennzeichnet, daß die Wurfschaufeln (5,6) in Scheibenebene winkelverschwenkbar angeordnet anhand der Markierungselemente in die jeweilige Position einstellbar sind.

22. Schleuderdüngerstreuer nach einem oder mehreren der vorstehenden Ansprüche, dadurch gekennzeichnet, daß die Wurfschaufeln (5,6) an ihren Abwurfenden in aufrechter Ebene veränderbare untere Leitflächen (34) aufweisen.

23. Schleuderdüngerstreuer mit Vorratsbehälter und Dosierorganen (13,14), unter denen rotierend angetriebene Schleuderscheiben (4), auf denen zumindest zwei in Scheibenebene winkelverschwenkbare und eine unterschiedliche Länge aufweisende Wurfschaufeln (5,6) angeordnet sind, sich befinden, wobei die Aufgabefläche (17,17',17'') des von den Dosierorganen (13,14) aus dem Vorratsbehälter (3) auf die Schleuderscheiben (4) aufgegebenen Düngers verlagerbar ist.

24. Schleuderdüngerstreuer nach Anspruch 1, dadurch gekennzeichnet, daß die Wurfschaufeln (5,6) an ihren Wurfenden in aufrechter Ebene veränderbare untere Leitflächen (34) aufweisen.

25. Schleuderdüngerstreuer nach Anspruch 1, dadurch gekennzeichnet, daß die Schleuderscheiben (4) an dem Gestell (1) des Schleuderdüngerstreuers gegenüber den Dosierorganen (13,14) bewegbar angeordnet sind.

26. Schleuderdüngerstreuer nach Anspruch 3, dadurch gekennzeichnet, daß die Schleuderscheiben (4) mittels einer Schiebeführung an dem Gestell angeordnet sind.

27. Schleuderdüngerstreuer nach Anspruch 3, dadurch gekennzeichnet, daß die Schleuderscheiben (4) mittels einer Schwenkführung angeordnet sind.

28. Schleuderdüngerstreuer nach Anspruch 1, dadurch gekennzeichnet, daß die Dosierorgane (13,14) gegenüber dem Vorratsbehälter bewegbar angeordnet sind.

29. Schleuderdüngerstreuer nach Anspruch 1, dadurch gekennzeichnet, daß zwischen den Dosierorganen (13,14) und den Schleuderscheiben (4) Leitelemente (18,23) angeordnet sind.
